# EUROPÄISCHE PATENTSCHRIFT

(11) **EP 0 606 540 B1**
(45) Veröffentlichungstag und Bekanntmachung des Hinweises auf die Patenterteilung: **28.05.1997**
(21) Anmeldenummer: 93117017.9
(22) Anmeldetag: 21.10.1993
(51) Int. Cl.: D04B 15/90, D06C 3/06, F16C 13/02

(54) **Warenabzugswalzenanordnung für Flachstrickmaschinen**
Fabric take-down roller device for flat bed knitting machines
Dispositif de rouleaux de tirage d'articles pour des métiers à tricoter rectilique

(30) Priorität: 18.12.1992 DE 4242969
(43) Veröffentlichungstag der Anmeldung: 20.07.1994
(73) Patentinhaber: H. Stoll GmbH & Co., D-72760 Reutlingen (DE)
(72) Erfinder: Schmid, Franz, Dipl.-Ing. (FH), D-72411 Bodelshausen (DE); Kazmaier, Günther, Ing. (grad), D-72813 St. Joh.-Ohnastetten (DE)
(74) Vertreter: Dreiss, Fuhlendorf, Steimle & Becker, Patentanwälte

(56) Entgegenhaltungen:
- EP-A- 0 254 213
- EP-A- 0 351 511
- DE-A- 2 110 079
- DE-A- 2 912 990
- DE-A- 3 313 554
- DE-C- 745 182
- US-A- 3 651 669

## Beschreibung

Die vorliegende Erfindung bezieht sich auf eine Warenabzugswalzenanordnung, insbesondere für Flachstrickmaschinen, nach dem Oberbegriff des Anspruchs 1.

Derartige Warenabzugswalzenanordnungen für Flachstickmaschinen sind aus der DE 33 13 554 C2 und aus der DE-PS 745 182 bekannt. In beiden Fällen sind jeweils beide Warenabzugswalzen einstückig und starr ausgebildet, wobei bei der zuletzt genannten Druckschrift eine der Warenabzugswalzen einendig federnd nachgiebig gelagert ist.

Mit einer derartigen Warenabzugswalzenanordnung ist zwar ein konstanter Warenabzug auch bei unterschiedlichen Warenbahnbreiten gegeben, jedoch ergeben sich dort Schwierigkeiten, wo das Gestrick bzw. die Warenbahn unregelmäßige Verdickungen aufweist, unter denen eine Auslenkung einer der Walzen in radialer Richtung stattfindet. Bei den bekannten Warenabzugswalzenanordnungen ist dabei nicht gewährleistet, daß nach wie vor die Walzen über im wesentlichen ihrer gesamten Länge an der Warenbahn anliegen, da bei zwei starren Walzen der Fall auftritt, daß dann, wenn die eine Walze aufgrund von Verdickungen im Gestrick auslenkt, die Nachbarwalze nicht mehr oder nur unvollständig greift.

Aus der US-A-3 651 669 bzw. der DE-A-20 00 211 ist eine Warenabzugswalzenanordnung nach dem Oberbegriff des Anspruchs 1 bekannt geworden, bei welcher eine der Warenabzugswalzen durch einzelne Walzenelemente zusammengesetzt ist, die jeweils an einem Stützträger drehbar gehalten sind. Die einzelnen Walzenelemente sind jeweils an einer Achse des Stützträgers drehbar gelagert und sind ohne Verbindung zueinander im Abstand angeordnet. Alle die einzelnen Walzenelemente haltenden Stützträger sind gemeinsam hinsichtlich ihrer Anpreßkraft einstellbar. Dies bedeutet, daß auch bei dieser bekannten Warenabzugswalzenanordnung bei Auftreten einer Verdickung im Gestrick nur eine radiale Auslenkung des gesamten Einzelwalzenelementes parallel zur Schwenkachse des Stützträgers stattfindet. Somit greift dasjenige einzelne Walzenelement, das aufgrund einer Verdickung im Gestrick ausgelenkt wird, über seine gesamte Länge nicht mehr am Gestrick an.

Aufgabe der vorliegenden Erfindung ist es deshalb, eine Warenabzugswalzenanordnung, insbesondere für Flachstrickmaschinen, der eingangs genannten Art zu schaffen, bei der gewährleistet ist, daß auch bei unregelmäßigen Verdickungen in der abzuziehenden Ware ein Eingriff der Warenabzugswalzenanordnung sowohl im Bereich der Verdickung als auch in dem oder den benachbarten Bereichen der abzuziehenden Ware gegeben ist.

Zur Lösung dieser Aufgabe sind bei einer Warenabzugswalzenanordnung der eingangs genannten Art die im Anspruch 1 angegebenen Merkmale vorgesehen.

Durch die erfindungsgemäßen Maßnahmen ist es möglich, daß jedes der Walzenelemente bei Auftreten einer Verdickung im Gestrick bzw. der abzuziehenden Ware derart ausweichen kann, daß nach wie vor zumindest die benachbarten Walzenelemente mit dem Gestrick in Eingriff bleiben. Es ist somit gewährleistet, daß eine radiale Auslenkung der Warenabzugswalze nur in einem eng begrenzten Bereich um die auftretende(n) Verdickung(en) auftritt. Außerdem kann für jedes Walzenelement die Größe des Druckes gegen die anderen Warenabzugswalze ausgewählt werden.

Eine konstruktiv einfache und sichere Drehmitnahme der einzelnen Walzenelemente untereinander und miteinander ergibt sich durch die Merkmale gemäß Anspruch 2.

Die gelenkige Lagerung der Walzenelemente im Stützträger ist in vorteilhafter Weise durch die Merkmale gemäß Anspruch 3 gegeben.

Um die einzelnen Walzenelemente in axialer Richtung gegeneinander zu fixieren und eine Auslenkung in axialer Richtung voneinander zu vermeiden, sind die Merkmale gemäß Anspruch 4 vorgesehen.

Vorteilhafterweise sind zur Halterung der Walzenelemente an den einzelnen Stützträgern die Merkmale gemäß Anspruch 5 vorgesehen, wonach die Walzenelemente nicht längs ihres Außenumfanges, sondern längs eines inneren Umfanges über die Rollenlager gefaßt sind. Dabei sind zweckmäßigerweise die Merkmale gemäß Anspruch 6 vorgesehen, die eine Verbindung zwischen den Rollenlagern und der schwenkbaren Aufhängung vorsehen.

Es wäre möglich, die einzelnen Stützträger jeweils an einem ortsfesten Bauteil der Flachstrickmaschine einzeln aufzuhängen. Gemäß den Merkmalen nach Anspruch 7 ist jedoch in vorteilhafter Weise eine gemeinsame starre Achse für die Schwenklagerung vorgesehen.

Gemäß einem bevorzugten Ausführungsbeispiel vorliegender Erfindung, wie es in den Merkmalen nach Anspruch 8 zum Ausdruck kommt, ist jeder Stützträger mit einer einzeln einstellbaren Spanneinheit versehen.

Gemäß den Merkmalen des Anspruchs 9 ist bei der erfindungsgemäßen Warenabzugswalzenanordnung nicht nur die Warenabzugswalze bei weggeschwenkter Gegenwalze in ihrer Auslenkung begrenzt.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Es zeigen:
- Figur 1: in perspektivischer Darstellung eine Warenabzugswalzenanordnung für Flachstrickmaschinen gemäß einem bevorzugten Ausführungsbeispiel vorliegender Erfindung,
- Figur 2: eine teilweise geschnittene und abgebrochene Vorderansicht gemäß Pfeil II der Fig. 1,
- Figur 3: in perspektivischer Darstellung zwei Walzenelemente der Warenabzugswalze mit ihren miteinander zusammenzufügenden Enden und
- Figur 4: einen der Schnittangabe IV-IV entsprechenden teilweise abgebrochenen Schnitt durch eine an einem ortsfesten Teil einer Flachstrickmaschinen gehaltene Warenabzugswalzenanordnung nach Fig. 1.

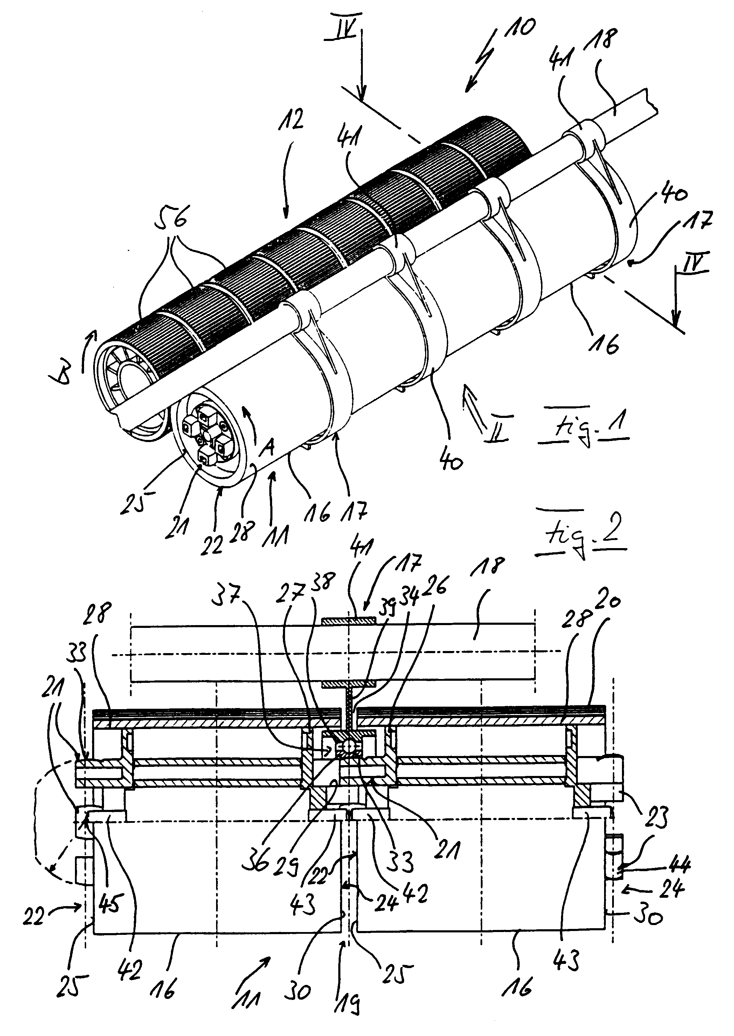

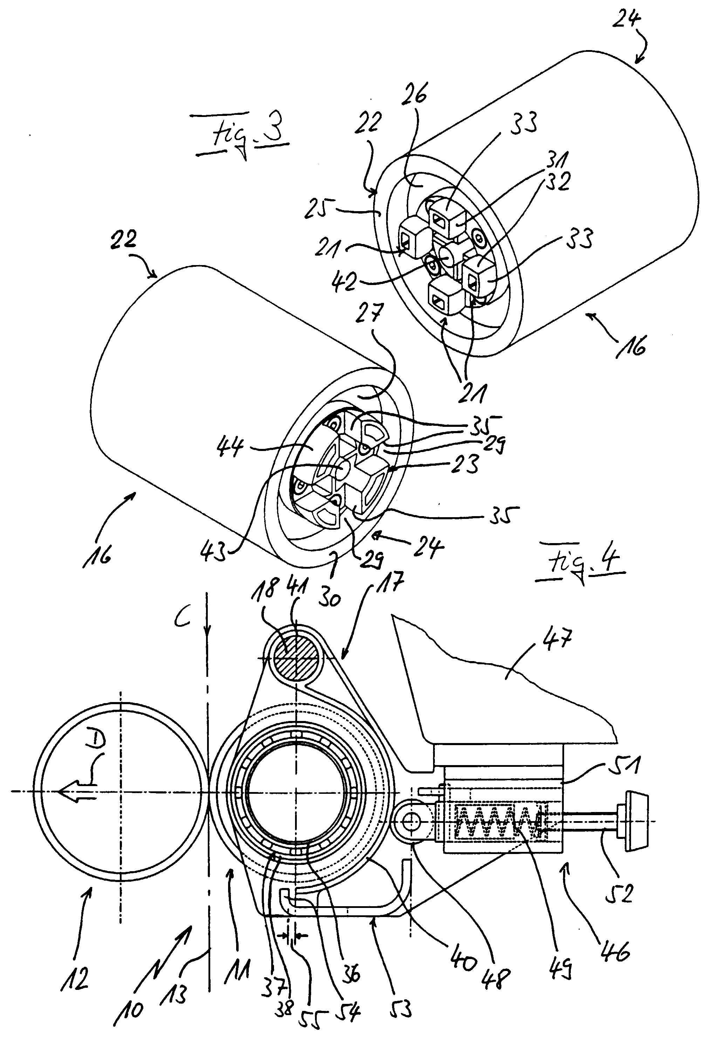

Gemäß Fig. 1 besitzt die hier von einer Flachstrickmaschine losgelöst dargestellte Warenabzugswalzenanordnung 10 eine Warenabzugswalze 11 und eine parallele Gegenwalze 12, die umfangsseitig praktisch aneinanderliegen und zwischen denen eine in Fig. 4 nur schematisch dargestellte Warenbahn 13 in Form eines Gestrickes von oben nach unten durchgezogen bzw. von der Flachstrickmaschine abgezogen wird. Dazu sind die Warenabzugswalze 11 und die Gegenwalze 12 gegeneinander gemäß den Pfeilen A und B motorisch angetrieben. Eine derartige Warenabzugswalzenanordnung 10 ist insbesondere für sog. Kamm-Maschinen geeignet.

Wie aus den Fig. 1 bis 3 ersichtlich ist, ist die Warenabzugswalze 11 aus mehreren identischen Walzenelementen 16 zusammengesetzt, die an ihren einander gegenüberliegenden Enden 22 und 24 drehschlüssig ineinandergreifen und die in jedem drehschlüssigen Verbindungsbereich 19 über einen Stützträger 17 an einer starr an der Flachstrickmaschine befestigten als Rundstab 18 ausgebildeten Achse schwenkbar aufgehängt sind. Die nebeneinander angeordneten Walzenelemente 16 sind über eine Anordnung von nebeneinandergreifenden balligen Klauen 21 am einen Ende 22 und Gegenklauen 23 am anderen Ende 24 versehen. Beim dargestellten Ausführungsbeispiel sind am einen Ende 22 jedes Walzenelementes 16 vier ballige Klauen 21 vorgesehen, die von einer inneren Scheibe 26 vorstehen, welche innerhalb eines äußeren Zylindermantels 28 gehalten und gegenüber dessen Stirn 25 zurückgesetzt ist. Die balligen Klauen 21 ragen über die Stirn 25 des Endes des Zylindermantels 28 hinaus. Entsprechendes gilt für die vier Gegenklauen 23, die von einer ebenfalls zurückgesetzten inneren Scheibe 27 abstehen und über die betreffende andere Stirn 30 des Zylindermantels 28 hinausragen und die zwischen sich Einschnitte 29 bilden, in welche die balligen Klauen 21 der Stirnseite 22 eingreifen. Die Gegenklauen 23 sind derart kreisringabschnittförmig, daß die Begrenzungswände 35 der Einschnitte 29 in radialer Richtung parallel und eben verlaufen; ihre radialen Außenflächen 44 jedoch sind zweidimensional ballig ausgebildet. Dagegen sind die balligen Klauen 21 sowohl an ihren Seitenflächen 31, 32 als auch an ihrer radialen Außenfläche 33 zweidimensional ballig ausgebildet. Der Zylindermantel 28 ist von einem Überzug 20 umfangsseitig überdeckt.

In ineinandergreifendem Zustand zweier benachbarter Walzenelemente 16 befinden sich gemäß Fig. 2 die beiden Enden Stirnseiten 25 und 30 der Zylindermäntel 28 in einem bestimmten Abstand (Spalt 34) und die balligen Klauen 21 greifen lediglich über einen Teilbereich der Tiefe der Einschnitte 29 in diese ein. Die balligen Klauen 21 der Walzenelemente 16 liegen mit ihren balligen Außenflächen 33 an der ebenen Innenfläche eines Innenringes 36 eines Radialwälzlagers, hier eines radialen Kugellagers 37 an. An der Außenseite des Außenringes 38 des Radialkugellagers 37 ist der Stützträger 17 in Form eines halbringförmig ausgebildeten Doppel-T-Element befestigt, dessen senkrechter Längssteg 39 durch den Spalt 34 zwischen den beiden Stirnseiten 25 und 30 benachbarter Walzenelemente 16 nach außen ragt. Der außenseitige Quersteg 40 des Stützträgers 17 ist an einem oberen Ende mit einer Lagerhülse 41 versehen, durch die die starre Achse 18 dringt und die in nicht dargestellter Weise auf der Achse 18 in axialer Richtung fixiert ist.

Daraus ist ersichtlich, daß in jedem Verbindungsbereich 19 benachbarter Walzenelemente 16 miteinander und benachbarter Walzenelemente mit dem Kugellager 37 des Stützträgers 17 aufgrund der balligen Flächen 31, 32, 33 zumindest der balligen Klauen 21 eine gelenkige Lagerung der drehfest miteinander verbundenen Walzenelemente 16 als auch eine gelenkige Aufhängung der Walzenelemente 16 im Stützträger 17 zum Ausschwenken von Walzenelementen 16 aus der Flucht der Längsachse der Warenabzugswalze 11 gegeben ist. Von den inneren Scheiben 26 und 27 der Walzenelemente 16 ragt jeweils mittig ein Anschlagstift 42, 43 vor, welche Anschlagstifte 42 und 43 mit ihren konvexen Stirnflächen aneinander anliegen und den Spalt 34 benachbarter Walzenelemente 16 konstant halten. In Fig. 2 ist angedeutet, daß der Scheitel 45 der konvexen Stirnfläche der Anschlagstifte 42,43 den Mittelpunkt der kugelförmig balligen Außenflächen 33 bzw. 44 bildet.

Wie sich aus Fig. 4 ergibt, ist die starre Achse 18 genau über der gedachten Längsachse der Warenabzugswalze 11 und die beiden Walzen 11 und 12 sind in einer horizontalen Ebene angeordnet. Aus dieser Figur ist auch ersichtlich, daß der halbkreisförmige Längssteg 39 und der etwa halbkreisförmige äußere Quersteg 40 des Stützträgers 17 in dem der Gegenwalze 12 abgewandten Umfangsbereich der Warenabzugswalze 11 angeordnet sind. An diesem der Gegenwalze 12 abgewandten Umfangsbereich der Warenabzugswalze 11 ist unterhalb der horizontalen Mittelebene der beiden Walzen 11 und 12 an einem ortsfesten Nadelbett-Träger oder Maschinenständer 47 für jedes Walzenelement 16 eine Spannvorrichtung 46 befestigt, welche dazu dient, die Warenabzugswalze 11 jeweils im Walzenelementen-Verbindungsbereich 19 gegen die starre Gegenwalze 12 federnd zu drücken. Hierzu besitzt jede Spannvorrichtung 46 eine am äußeren Quersteg 40 des Stützträgers 17 anliegende Rolle 48, die in einem Gehäuse 51 über eine Druckfeder 49 elastisch verschiebbar gelagert ist. Die Druckfeder 49 liegt an ihrem der Rolle 48 abgewandten Ende an einem in das Gehäuse 51 einschraubbaren Stellstift 52 an, mit welchem die Größe des Druckes jedes Stützträgers 17 und damit der einzelnen Walzenelemente 16 auf die Gegenwalze 12 einzeln wählbar und einstellbar ist.

Die Gegenwalze 12 besitzt mehrere Walzenelemente 56, die starr auf einer angetriebenen Welle aufgereiht sind. Dabei sind die Walzenelemente 56 der Gegenwalze 12, wie sich aus Fig. 1 ergibt, kürzer als die Walzenelemente 16 der Warenabzugswalze 11, vorzugsweise etwa halb so lang. Die Gegenwalze 12 ist in nicht näher dargestellter Weise gemäß Pfeil D aus dem Bereich der Warenabzugswalze 11 abschwenkbar. Um für diesen Fall ein Nachschwenken der Walzenelemente 16 der Warenabzugswalze 11 zu begrenzen, ist unterhalb der Warenabzugswalze 11 ein rinnenartiges Blech 53 ortsfest angeordnet, an dessen einem hochgebogenen Steg 54 das sich hiervon in einem geringen Abstand 55 befindende freie Ende des äußeren Querstegs 40 des Stützträgers 17 anschlagen kann.

Die in Fig. 4 schematisch angedeutete Warenbahn 13 wird somit gemäß Pfeil C von oben nach unten durch die beiden angetriebenen Walzen 11 und 12 abgezogen. Ist die Warenbahn 13 mit unregelmäßigen Verdickungen versehen, so kann das im Bereich dieser Verdickung liegende Walzenelement 16 dadurch ausweichen, daß es mit dem oder den nächstgelegenen Stützträger(n) 17 entgegen der Wirkung der Druckfeder 49 der Spannvorrichtung 46 ausgelenkt wird. Da die Verbindung des betreffenden Walzenelementes 16 zum benachbarten Walzenelement und auch innerhalb des Stützträgers 17 mittels der balligen Flächen 31,32 bzw. 33,34 gelenkig ist, bleibt das benachbarte Walzenelement 16 zumindest in einer Teillänge nach wie vor am betreffenden, nicht mit einer Verdickung versehenen Bereich der Warenbahn 13 angelegt. Bei dieser Auslenkung eines Stützträgers 17 kann sich das betreffende Walzenelement 16 mit den balligen Flächen 31,32der Klauen 21 gegenüber den Gegenklauen 23 des benachbarten Walzenelementes 16 und mit den balligen Außenflächen 33,44 von Klauen 21 und Gegenklauen 23 gegenüber der ebenen Innenfläche des Innenrings 36 des Kugellagers 37 gelenkig bewegen.

## Patentansprüche

1. Warenabzugswalzenanordnung, insbesondere für Flachstrickmaschinen, mit zwei Warenabzugswalzen (11, 12), die vorzugsweise beide angetrieben und parallel angeordnet sind und zwischen denen die abzuziehende Warenbahn (13) tangential geführt ist, wobei zumindest eine der Warenabzugswalzen (11, 12) gegen die andere Warenabzugswalze gedrückt und durch in axialer Richtung nebeneinander angeordnete Walzenelemente (16) gebildet ist, die an jeweils einem in einer zur Ausrichtung der Walzenelemente (16) senkrechten Richtung schwenkbaren Stützträger (17) drehbar gehalten sind, **dadurch gekennzeichnet, daß** die Walzenelemente (16) an ihren einander zugewandten Enden (22, 24) drehschlüssig ineinandergreifen, daß die einander zugewandten Enden (22, 24) der Walzenelemente (16) sowohl aneinander als auch im Stützträger (17) gelenkig gelagert sind und daß die Walzenelemente (16) an ihren einander zugewandten Enden (22, 24) in einzeln einstellbarer Weise gegen die andere Warenabzugswalze gedrückt sind.

2. Warenabzugswalzenanordnung nach Anspruch 1, dadurch gekennzeichnet, daß die Walzenelemente (16) an ihren zugewandten Enden (22,24) mit ineinander- und nebeneinandergreifenden Klauen (21,23) versehen sind, von denen zumindest die Klauen (21) des einen Endes (22) zumindest an ihren den Klauen des anderen Endes benachbarten Flächen (31,32) zweidimensional ballig sind.

3. Warenabzugswalzenanordnung nach den Ansprüchen 1 und 2, dadurch gekennzeichnet, daß die Walzenelemente (16) an den Flächen (33,44) ihrer Klauen (21,23), die an einer Aufnahme (36) des Stützträgers (17) anliegen, zweidimensional ballig sind.

4. Warenabzugswalzenanordnung nach mindestens einem der vorhergehenden Ansprüche, dadurch gekennzeichnet, daß die Walzenelemente (16) achsmittig mit einem Längenanschlag (42,43) versehen sind.

5. Warenabzugswalzenanordnung nach mindestens einem der vorhergehenden Ansprüche, dadurch gekennzeichnet, daß der Stützträger (17) mit einem innerhalb der Walzenelemente (16) angeordneten Radialrollenlager (37) versehen ist, in dessen Innenring (36) die Enden der Walzenelemente (16) aufgenommen sind.

6. Warenabzugswalzenanordnung nach Anspruch 5, dadurch gekennzeichnet, daß der Außenring (38) des Radialrollenlagers (37) an einer etwa halbkreisförmigen Scheibe (39) des Stützträgers (17) gehalten ist, die den Spalt (34) zwischen zwei benachbarten Walzenelementen (16) durchdringt und mit einer Lagerhülse (41) fest verbunden ist.

7. Warenabzugswalzenanordnung nach mindestens einem der vorhergehenden Ansprüche, dadurch gekennzeichnet, daß die Stützträger (17) nebeneinandergereiht auf einer zur Längserstreckung der Abzugswalze (11) im wesentlichen parallelen starren Achse (18) schwenkbar aufgehängt sind.

8. Warenabzugswalzenanordnung nach mindestens einem der vorhergehenden Ansprüche, dadurch gekennzeichnet, daß jeder Stützträger (17) mittels einer separat einstellbaren Spanneinheit (46) in seiner Schwenkrichtung kraftbeaufschlagbar ist.

9. Warenabzugswalzenanordnung nach mindestens einem der vorhergehenden Ansprüche, dadurch gekennzeichnet, daß die Gegenwalze (12) wegschwenkbar ist und die Stützträger (17) einem ortsfesten Anschlag (54) gegenüberliegen.

## Claims

1. Fabric take-down roller arrangement, in particular for flat knitting machines, comprising two fabric take-down rollers (11, 12) which are preferably both driven and arranged in parallel and between which the web (13) to be taken down is tangentially guided, at least one of the fabric take-down rollers (11, 12) being pressed against the other fabric take-down roller and being formed by roller elements (16) arranged alongside one another in the axial direction and rotatably held on respective supports (17) pivotable in a direction perpendicular to the alignment of the roller elements (16), characterised in that the roller elements (16) interlock at their ends (22, 24) directed towards one another, that the ends (22, 24) of the roller elements (16) directed towards one another are hinged both together and in the support (17) and that the roller elements (16) are pressed in an individually adjustable manner against the other fabric take-down roller at their ends (22, 24) directed towards one another.

2. Fabric take-down roller arrangement according to claim 1, characterised in that the roller elements (16) are provided at their ends (22, 24) directed towards one another with claws (21, 23) interlocking alongside one another, at least the claws (21) of one end (22) being two-dimensionally spherical at least on their surfaces (31, 32) adjacent to the claws of the other end.

3. Fabric take-down roller arrangement according to claims 1 and 2, characterised in that the roller elements (16) are two-dimensionally spherical on the surfaces (33, 44) of their claws (21, 23) bearing against a holder (36) for the support (17).

4. Fabric take-down roller arrangement according to at least one of the preceding claims, characterised in that the roller elements (16) are provided in their axial centre with a longitudinal stop (42, 43).

5. Fabric take-down roller arrangement according to at least one of the preceding claims, characterised in that the support (17) is provided with a radial roller bearing (37) arranged within the roller elements (16), the ends of the roller elements (16) being received in the inner race (36) thereof.

6. Fabric take-down roller arrangement according to claim 5, characterised in that the outer race (38) of the radial roller bearing (37) is held on a substantially semicircular disc (39) of the support (17) which traverses the gap (34) between two adjacent roller elements (16) and is rigidly connected to a bearing sleeve (41).

7. Fabric take-down roller arrangement according to at least one of the preceding claims, characterised in that the supports (17) are pivotably mounted in line on a rigid axle (18) substantially parallel to the longitudinal extent of the take-down roller (11).

8. Fabric take-down roller arrangement according to at least one of the preceding claims, characterised in that forces can be applied to each support (17) in its pivotal direction by means of an individually adjustable tensioning unit (46).

9. Fabric take-down roller arrangement according to at least one of the preceding claims, characterised in that the counter roller (12) can be pivoted away and the supports are situated opposite a fixed stop (54).

## Revendications

1. Dispositif de rouleaux d'enroulement du tissu, notamment pour des métiers à tricoter rectilignes, comprenant :
- deux rouleaux (11, 12) d'enroulement de tissu qui sont tous les deux, de préférence, entraînés et disposés de façon parallèle et entre lesquels la nappe de tissu (13) à enrouler est guidée de façon tangentielle,
- au moins un des rouleaux (11, 12) d'enroulement du tissu étant en appui contre l'autre rouleau d'enroulement du tissu et étant formé par des éléments de rouleau (16) disposés l'un à côté de l'autre dans la direction axiale qui sont maintenus en rotation, respectivement, sur un support (17) pouvant pivoter dans une direction normale par rapport à l'alignement des éléments de rouleau (16),
**caractérisé en ce que**
les éléments de rouleau (16), au niveau de leurs extrémités (22, 24) tournées l'une vers l'autre, sont en prise l'un dans l'autre, en étant entraînés par rotation,
**en ce que** les extrémités (22, 24) tournées l'une vers l'autre des éléments de rouleau (16) sont montées en étant mobiles aussi bien l'une contre l'autre que dans le support (17), et
**en ce que** les éléments de rouleau (16), au niveau de leurs extrémités (22, 24) tournées l'une vers l'autre, sont en appui contre l'autre rouleau d'enroulement du tissu, de façon réglable individuellement.

2. Dispositif de rouleaux d'enroulement du tissu selon la revendication 1, caractérisé en ce que les éléments de rouleau (16), au niveau de leurs extrémités (22, 24) tournées l'une vers l'autre, sont munis de crabots (21, 23) venant en prise l'un dans l'autre et l'un à côté de l'autre, parmi lesquels au moins les crabots (21) d'une extrémité (22) sont bombés de façon bidimensionnelle au moins au niveau de leurs surfaces (31, 32) contiguës aux crabots de l'autre extrémité.

3. Dispositif de rouleaux d'enroulement du tissu selon les revendications 1 et 2, caractérisé en ce que les éléments de rouleau (16), au niveau des surfaces (33, 44) de leurs crabots (21, 23) qui sont contiguës à un logement (36) du support (17), sont bombés de façon bidimensionnelle.

4. Dispositif de rouleaux d'enroulement du tissu selon au moins l'une quelconque des revendications précédentes, caractérisé en ce que les éléments de rouleau (16) sont munis, au centre de l'axe, d'une butée longitudinale (42, 43).

5. Dispositif de rouleaux d'enroulement du tissu selon au moins l'une quelconque des revendications précédentes, caractérisé en ce que le support (17) est muni d'un roulement à billes radial (37) disposé à l'intérieur des éléments de rouleau (16), roulement dans l'anneau intérieur (36) duquel sont logées les extrémités des éléments de rouleau (16).

6. Dispositif de rouleaux d'enroulement du tissu selon la revendication 5, caractérisé en ce que l'anneau extérieur (38) du roulement à billes radial (37) est maintenu sur un disque (39), de forme sensiblement demi-circulaire, du support (17), ledit disque traversant l'espace (34) entre deux éléments de rouleau (16) contigus, et étant relié fixement à un manchon (41).

7. Dispositif de rouleaux d'enroulement du tissu selon au moins l'une quelconque des revendications précédentes, caractérisé en ce que les supports (17), alignés les uns à côté des autres, sont suspendus de façon à pouvoir pivoter sur un axe fixe (18) essentiellement parallèle à la disposition longitudinale du rouleau (11) d'enroulement du tissu.

8. Dispositif de rouleaux d'enroulement du tissu selon au moins l'une quelconque des revendications précédentes, caractérisé en ce qu'une force peut être appliquée, au moyen d'un élément de serrage (46) réglable séparément, sur chaque support (17) suivant le sens de pivotement dudit support.

9. Dispositif de rouleaux d'enroulement du tissu selon au moins l'une quelconque des revendications précédentes, caractérisé en ce que le contre-rouleau (12) peut être éloigné en pivotant et en ce que les supports (17) sont placés à l'opposé d'une butée fixe (54).
